# EUROPÄISCHE PATENTSCHRIFT

(11) **EP 1 878 369 B1**
(45) Veröffentlichungstag und Bekanntmachung des Hinweises auf die Patenterteilung: **29.04.2009**
(21) Anmeldenummer: 06014755.0
(22) Anmeldetag: 14.07.2006
(51) Int. Cl.: A47J 31/44

(54) **Vorrichtung zum Erwärmen eines Trinkgefässes**
Device for heating a drinking vessel
Dispositif pour chauffer un récipient à boire

(43) Veröffentlichungstag der Anmeldung: 16.01.2008
(73) Patentinhaber: WMF WÜRTTEMBERGISCHE METALLWARENFABRIK AG, 73309 Geislingen/Steige (DE)
(72) Erfinder: Göltenboth, Frank, 89134 Blaustein (DE)
(74) Vertreter: Grünecker, Kinkeldey, Stockmair & Schwanhäusser Anwaltssozietät

(56) Entgegenhaltungen:
- FR-A- 2 716 792

## Beschreibung

Die Erfindung bezieht sich auf eine Vorrichtung zum Erwärmen eines Trinkgefäßes der im Oberbegriff von Anspruch 1 erläuterten Art.

Eine derartige Vorrichtung ist aus der FR 2 716 792 bekannt. Die bekannte Vorrichtung ist Teil einer Kaffeemaschine und enthält eine Aufnahmeeinrichtung für ein vorzuwärmendes Trinkgefäß. Die Aufnahmeeinrichtung enthält eine Art umgedrehten Teller, auf den das Trinkgefäß, mit der Öffnung nach unten, aufgesetzt wird. Im Zentrum des Tellers befindet sich eine Düseneinrichtung, die in den Teller eingepasst ist und vom Teller vorsteht. Die Düseneinrichtung weist eine Vielzahl kleiner Öffnungen auf, die für eine hohe Dampfgeschwindigkeit sorgen. Die Düsenöffnungen stehen über das hohle Innere eines Ventilstößels mit einem Dampfeinlass in Verbindung. Die Dampfzufuhr ist so ausgebildet, dass der Dampf im Wesentlichen geradlinig durch das Innere des Ventilstößels in die Düsenöffnungen strömt. Durch diese Ausgestaltung ist jedoch eine Gefährdung des Benutzers nicht ausgeschlossen, wenn beispielsweise eine Tasse nicht korrekt aufgesetzt wird oder die Vorwärmeinrichtung betätigt wird, wenn sich keine Tasse darin befindet.

Eine weitere aus dem DE-U-93 17 669 bekannte Vorrichtung enthält einen Ventilkörper und eine pilzförmige Kappe, die relativ zum Ventilkörper bewegbar ist und starr mit einem Schließglied verbunden ist, mit dem eine Dampfeinlassöffnung unterhalb der pilzförmigen Kappe geöffnet und geschlossen werden kann. Die vorzuwärmende Tasse wird umgekehrt, d.h. mit der Öffnung nach unten, über den Ventilkörper gestülpt, bis irgendeine Stelle der Tassenwandung an der pilzförmigen Kappe anliegt und die pilzförmige Kappe nach unten drückt. Dadurch wird das Dampfeinlassventil geöffnet und Dampf kann in das Innere der Tasse strömen und deren Wandung aufheizen. Die bekannte Vorrichtung hat jedoch mehrere Nachteile. So wird durch die pilzförmige Kappe der Bereich am Boden des Trinkgefäßes gegen den Dampfeintritt abgeschirmt und somit nicht erwärmt. Dies ist besonders nachteilig bei kleinen oder stark konischen Trinkgefäßen, bei denen auf diese Weise ein großer Teil der Wandung des Trinkgefäßes gegen einen Dampfkontakt abgeschirmt wird, während der Dampf unter dem Tassenrand hervorquellen kann und den Benutzer gefährden könnte.

Darüber hinaus ist die bekannte Vorrichtung nur unzureichend an Trinkgefäße unterschiedlicher Durchmesser und/oder Höhen anzupassen, wobei für eine möglichst universelle Verwendung der Ventilkörper und die pilzförmige Kappe einen relativ kleinen Durchmesser aufweisen müssen. Relativ kleine Durchmesser bergen jedoch die Gefahr in sich, dass eine aufgesetzte Tasse nicht genügend Halt findet und kippt, so dass ein austretender Dampfstrahl den Benutzer gefährden könnte.

Der Erfindung liegt somit die Aufgabe zugrunde, eine Vorrichtung zum Erwärmen eines Trinkgefäßes bereltzusteiien, das auf konstruktiv einfache Weise eine sichere Funktion bietet und im Wesentlichen unabhängig von der Größe des Trinkgefäßes korrekt funktioniert.

Die Aufgabe wird durch die im Anspruch 1 angegebenen Merkmale gelöst.

Durch den erfindungsgemäß an der Seite der Abdeckung vorgesehenen Dampfverteilraum, der zwischen dem Dampfeinlass und der Öffnung an der Abdeckfläche angeordnet ist, wird eine Beruhigung des Dampfes erreicht, so dass dieser den Benutzer nicht gefährden kann, selbst wenn die Vorwärmvorrichtung ohne aufgelegte Tasse betätigt werden sollte. Darüber hinaus sorgt der Dampfverteilraum für eine erste Abscheidung von mitgerissenem Kondensat, so dass dieses nicht aus der Öffnung der Abdeckfläche herausspritzen kann. Trotzdem wird durch den erfindungsgemäßen Dampfverteilraum die Vorwärmkapazität nicht verringert.

Vorteilhafte Weiterbildungen der Erfindung sind den Unteransprüchen zu entnehmen.

Der Dampfverteilraum ist bevorzugt als Kondensatsammeleinrichtung ausgebildet, die sowohl das vom Dampf mitgerissenen Kondensat, als auch, bei Ausbildung der Abdeckfläche als Stellfläche, das an der Wandung des Trinkgefäßes herabfließende Kondensat auffängt und sicher ableitet.

Der Vorwärmvorgang wird zweckmäßigerweise vom Benutzer selbst eingeleitet. Um zu verhindern, dass die Dampfzufuhr versehentlich eingeleitet wird, ohne dass ein Trinkgefäß vorgewärmt werden soll, sind ein oder bevorzugt zwei benutzerbetätigbare Ventile in der Dampfzufuhr vorgesehen, die beide betätigt werden müssen, um die Dampfzufuhr für einen Vorwärmvorgang zu öffnen.

Zweckmäßigerweise sind dies beispielsweise ein mechanisch durch eine Bewegung der Abdeckung betätigbares Ventil, das beispielsweise durch das Gewicht des Trinkgefäßes, unterstützt gegebenenfalls durch einen leichten Druck auf das Trinkgefäß in Richtung auf die Abdeckung, geöffnet werden kann, und/oder ein über ein Bedienelement (Berührungsfeld, Taste, Knopf oder dgl.) betätigbares Ventil, das beispielsweise als Vorwahl zum Einleiten eines Vorwärmvorganges ausgebildet werden kann.

Erfindungsgemäß wird die in das Innere des Trinkgefäßes führende Öffnung als wenigstens eine einfache Durchbrechung der Abdeckung ausgebildet, die demzufolge einen ausreichend großen Durchmesser annehmen kann, um eine Düsenwirkung, d.h. ein Herausschießen des Dampfes, zu vermeiden.

Die Abdeckfläche kann auch einen dampfdurchlässigen Bereich mit einer Vielzahl von Öffnungen bzw. Durchbrechungen, z. B. in Form einer perforierten Abdeckung, eines Siebs, eines Gewebes oder dgl. enthalten.

Dem Zwecke einer erhöhten Sicherheit dient weiterhin eine Dampf-Labyrinth-Strecke, die verhindert, dass der von einem Dampferzeuger über eine Dampfleitung angelieferte Dampf in direktem Strahl austritt.

Eine Beruhigung der Dampfströmung kann auch durch den quer zur Öffnung in den Dampfverteilraum einmündenden Dampfeinlass bewirkt werden.

Die Abdeckung enthält bevorzugt eine Stellfläche für das umgedrehte Trinkgefäß. Dies hat den Vorteil, dass die Schwerkraft unterstützend für einen allseitigen, dichtenden Kontakt der Abdeckung mit dem Rand des Trinkgefäßes rund um die Öffnung wirken kann.

Ein mögliche Gefährdung des Benutzers wird weiterhin stark vermindert, wenn die Abdeckfläche ringsum an dem Rand des Trinkgefäßes anliegt, d.h. mit dem Rand des Trinkgefäßes eine Dichtung bildet.

Die erfindungsgemäße Vorrichtung kann als Zusatzgerät ausgebildet und beispielsweise mit einer eigenen Dampferzeugung ausgerüstet sein, sie ist jedoch bevorzugt in eine Getränkemaschine integriert und nutzt die dort vorgesehene Dampferzeugung und gegebenenfalls auch die Steuerung.

Ausführungsbeispiele der Erfindung werden nachfolgend anhand der Zeichnungen näher erläutert. Es zeigen:
- Fig. 1: eine perspektivische, stark schematisierte Darstellung einer erfindungsgemäß ausgerüsteten Getränkemaschine,
- Fig. 2: eine schematische Darstellung eines ersten Ausführungsbeispiels einer erfindungsgemäßen Vorrichtung im Schnitt,
- Fig. 3: eine schematische Darstellung eines zweiten Ausführungsbeispiels einer erfindungsgemäßen Vorrichtung im Schnitt,
- Fig. 4: eine schematische Darstellung eines weiteren Ausführungsbeispiels einer erfindungsgemäßen Vorrichtung im Schnitt, und
- Fig. 5: die Ansicht der Vorrichtung gemäß Fig. 4 von unten.

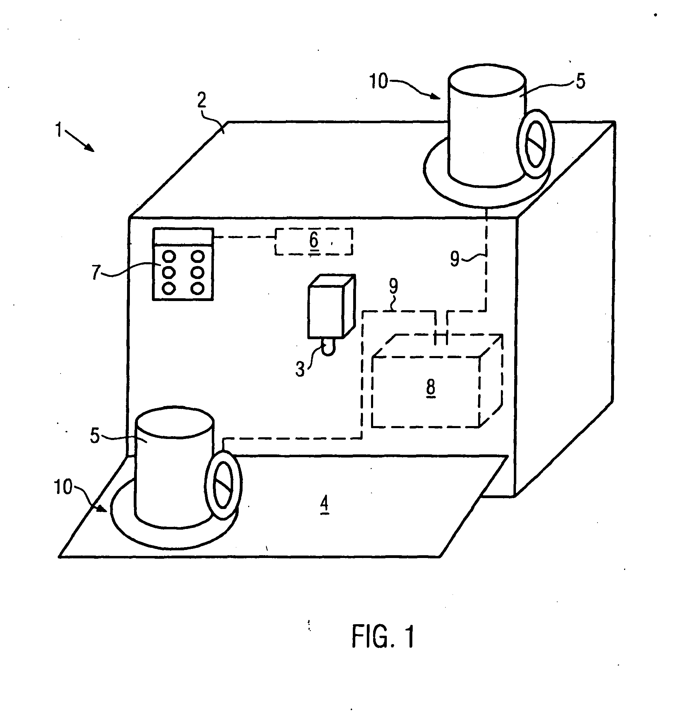

Fig. 1 zeigt in stark schematisierter Darstellung eine erfindungsgemäße Getränkemaschine 1, die einer der üblichen Getränkeautomaten oder, wie dargestellt, eine Kaffeemaschine sein kann, wie sie beispielsweise in der Gastronomie, in Kantinen, in Selbstbedienungseinrichtungen, im Haushalt oder dgl. eingesetzt wird. Derartige Getränkemaschinen sind in großer Zahl bekannt und müssen hier nicht näher erläutert werden. Die Getränkemaschine 1 enthält ein Gehäuse 2, das die üblichen Bestandteile der Getränkemaschine 1 beherbergt, also beispielsweise eine Brüheinrichtung zum Zubereiten einer oder mehrerer Sorten von Kaffeegetränken mit einem Auslass 3 zum Ausgeben des Kaffeegetränks, der oberhalb einer Standfläche 4, beispielsweise als Topfblech ausgebildet, ausmündet, so dass unter den Auslass 3 ein Trinkgefäß 5, dargestellt sind Tassen, gestellt und befüllt werden kann. Die Einleitung und Durchführung eines Getränkezubereitungs- und -ausgabevorgangs wird durch eine Steuerung 6 bewirkt, die über Bedienelemente 7 beaufschlagt wird. Die Bedienelemente 7 enthalten die üblichen Tasten, Knöpfe, Berührungsfelder oder dgl. und sind an der Außenseite des Gehäuses 2, für den Benutzer leicht zugänglich, angeordnet.

Im Gehäuse 2 ist weiterhin ein Dampferzeuger 8 untergebracht, der wiederum nur schematisch dargestellt ist. Der Dampferzeuger 8 kann jede bei Getränkemaschinen zweckmäßige Konstruktion aufweisen und hat einen eigenen Auslass (nicht dargestellt) bzw. ist mit dem Auslass 3 verbunden, um Dampf beispielsweise zum Erwärmen von Wasser für die Teezubereitung, zum Aufschäumen von Milch oder für andere Zwecke dem Benutzer zur Verfügung zu stellen.

Der Dampfbereiter 8 ist weiterhin über eine Leitung 9 und ein Ventil 9a mit einer Vorrichtung 10 zum Erwärmen bzw. Vorwärmen der Trinkgefäße 5 verbunden.

In Fig.1 sind zwei derartige Vorrichtungen 10 dargestellt, wobei die eine Vorrichtung 10 auf der Oberseite des Gehäuses 2, beispielsweise in der Nähe einer Tassenablage, und die andere Vorrichtung 10 auf der Standfläche 4 im Abstand zum Auslass 3, vorgesehen ist. Die zwei gezeichneten Vorrichtungen 10 sollen lediglich die bevorzugten Anordnungsbereiche zeigen; die Anordnung einer einzigen Vorrichtung 10, an einer der gezeigten oder an anderen geeigneten Stellen, ist für die meisten Verwendungszwecke ausreichend.

Nachfolgend werden bevorzugte Ausführungsbeispiele der Vorrichtung 10 beschrieben, die sich jeweils für den Einsatz bei der Getränkemaschine 1 der Fig. 1 eignen.

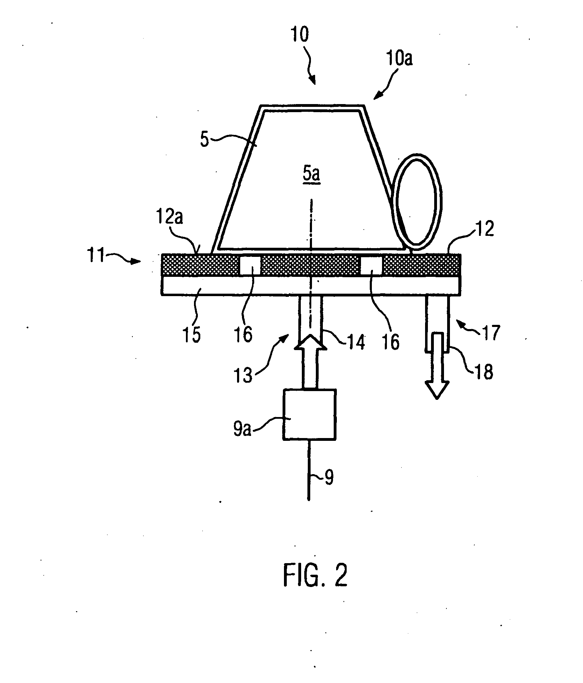

Fig. 2 zeigt ein erstes Ausführungsbeispiel 10a einer erfindungsgemäßen Vorrichtung 10 zum Erwärmen eines Trinkgefäßes 5, das sich insbesondere für eine Getränkemaschine 1 eignet, jedoch auch als eigenes Zusatzgerät ausgebildet sein kann (und dann mit einem eigenen Dampferzeuger 8 versehen ist).

Die Vorrichtung 10 enthält eine Aufnahmeeinrichtung 11 für das Trinkgefäß 5, die eine Abdeckung 12 mit einer Abdeckfläche 12a für die Öffnung des Trinkgefäßes 5 enthält. Die Abdeckfläche 12a ist so bemessen, dass sie die Öffnung des Trinkgefäßes 5 verschließt und bevorzugt mit einer Dichtfläche vollflächig am oberen Rand des Trinkgefäßes 5 anliegt, so dass ein umlaufender Kontakt zwischen der Abdeckfläche 12a und dem oberen Rand des Trinkgefäßes 5 für einen Abschluss des Innenraums 5a des Trinkgefäßes 5 sorgt. Die Dichtfläche kann durch eine glatte, ebene Fläche für einen vollflächigen Kontakt mit dem Rand des Trinkgefäßes oder eiastisch nachgiebig oder dergleichen ausgebildet sein. Im dargestellten Ausführungsbeispiel ist die Abdeckfläche 12a ais nach oben weisende Standfläche ausgebildet, auf der das umgedrehte Trinkgefäß 5 ruht. Die Abdeckung 12 hat die Form einer Platte oder eines Tellers; und die Abdeckfläche 12a ist eben, horizontal und ausreichend groß im Durchmesser, so dass auch Trinkgefäße 5 mit großem Durchmesser sicher unterstützt werden können.

Die Aufnahmeeinrichtung 11 enthält weiterhin eine Dampfzufuhr 13, die einen über das Ventil 9a mit dem Dampfbereiter 8 verbundenen Dampfeinlass 14 enthält. Der Dampfeinlass 14 mündet in einen Dampfverteilraum 15, der sich an der der Abdeckfläche 12a abgewandten Seite der Abdeckung 12; d. h. bevorzugt unterhalb der Abdeckung 12 befindet. Im Dampfverteilraum 15 entspannt sich der eingeleitete Dampf und verliert eventuell mitgerissenes Kondensat. Durch die Abdeckung 12 erstreckt sich wenigstens eine innerhalb der Abdeckfläche 12a mündende Öffnung 16 (dargestellt sind zwei mit Abstand nebeneinander liegende Öffnungen), durch die Dampf aus dem Verteilraum 15 in das Innere 5a strömen kann.
Die Öffnung 16 ist als einfache Durchbrechung der Abdeckung 12 ausgebildet und muss nicht unbedingt Düsencharakter haben, so dass die Dampfgeschwindigkeit nicht zu groß wird, um den Benutzer gefährden zu können.

Die Abdeckung 12 kann jedoch auch mit einem dampfdurchlässigen Bereich (nicht dargestellt) mit einer Vielzahl von Öffnungen 16 versehen sein, der z. B. als perforierter Bereich, als Sieb, als Gewebe oder dgl. ausgebildet ist.

Im dargestellten Ausführungsbeispiel mündet der Dampfeinlass 14 in den Dampfverteilraum 15 an der der Abdeckung 12 gegenüberliegenden Begrenzungswand des Dampfverteilraums 15 und im Wesentlichen zentrisch zur Abdeckfläche 12a. Die Öffnung 16 ist hingegen seitlich zum Einlass 14 versetzt, so dass der Einlass 14 und die Öffnung 16 nicht miteinander fluchten und dadurch eine Labyrinthstrecke für den Dampf bilden. Die Öffnung(en) 16 befindet oder befinden sich jedoch innerhalb der Abdeckfläche 12a und bevorzugt so nahe an deren Mittellinie (was besonders wichtig ist, wenn mehr als eine Öffnung 16 vorgesehen ist), dass auch kleine Trinkgefäße 5 problemlos vorgewärmt werden können. Der Dampfverteilraum 15 ist so groß, dass er alle vorgesehenen Öffnungen 16 mit Dampf beliefern kann.

Die Aufnahmeeinrichtung 11 enthält weiterhin eine Kondensatsammeleinrichtung 17. Diese nutzt den Dampfverteilraum 15 ais Kondensatsammier und enthält eine Kondensatausiassleitung 18, die bevorzugt am tiefsten Punkt des Dampfverteilraums 15 vorgesehen ist. Wird die erfindungsgemäße Vorrichtung 10 auf dem Tropfblech 4 angeordnet, so kann das Kondensat auch einfach in die Tropfschale geleitet werden.

Das Ventil 9a wird durch die Steuerung 6 beaufschlagt, wobei das Ventil 9a vom Benutzer geöffnet werden kann, beispielsweise über eines der Bedienelemente 7. Das Schließen des Ventils 9a kann entweder ebenfalls vom Benutzer bewirkt werden oder nach Ablauf einer vorbestimmten Zeit selbsttätig erfolgen.

Zum Vorwärmen eines Trinkgefäßes stellt der Benutzer das Trinkgefäß kopfüber auf die Abdeckfläche 12a und ordnet das Trinkgefäß 5 so an, dass alle Öffnungen 16 überdeckt sind, was durch eine geeignete Markierung der Abdeckfläche 12a erleichtert werden kann. Dann wird das Ventil 9a geöffnet und Dampf strömt über den Einlass 14 in den Dampfverteilraum 15 und von dort durch die Öffnungen 16 in den Innenraum 5a des Trinkgefäßes 5 und wärmt dieses vor. Das auftretende Kondensat fließt zurück durch die Öffnungen 16 in den Dampfverteilraum 15, bzw. fällt im Dampfverteilraum 15 an, und wird gesammelt über den Kondensatauslass 18 abgeführt. Nach Beendigung der Dampfzufuhr kann der Benutzer das Trinkgefäß 5 wieder aus der Vorrichtung 10 entfernen und beispielsweise unter den Auslass 3 zum Befüllen stellen.

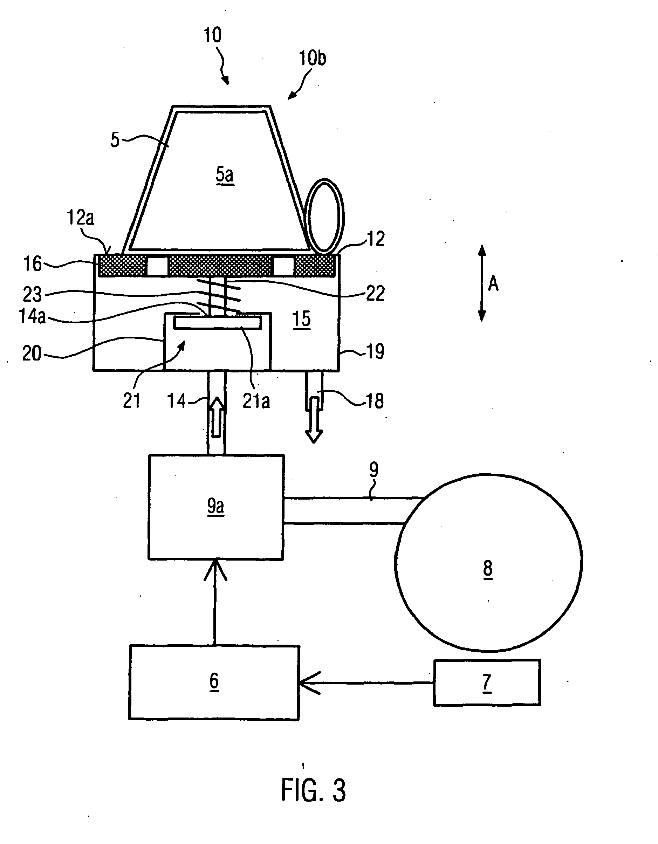

Fig. 3 zeigt ein weiteres Ausführungsbeispiel 10b der erfindungsgemäßen Vorrichtung 10, wobei gleiche bzw. vergleichbare Bauteile mit den gleichen Bezugszeichen gekennzeichnet und nicht nochmals erläutert sind. Auch das Ausführungsbeispiel 10b kann in die Getränkemaschine 1 integriert oder als eigenständige Vorrichtung ausgebildet und ggf. mit einem eigenen Dampferzeuger versehen sein.

Das Ausführungsbeispiel 10b der Fig. 3 unterscheidet sich vom Ausführungsbeispiel 10a der Fig. 2 durch ein Führungsgehäuse 19, in dem die Abdeckung 12 in Richtung des Doppelpfeils A nach oben und unten bewegbar gelagert ist. Das Führungsgehäuse 19 beherbergt weiterhin den Dampfverteilraum 15 und ein nicht näher dargestelltes Gehäuse 20 für ein Ventil 21, das hier ais mechanisches Ventil ausgebildet ist, das eine Dampfeinlassöffnung 14a, die mit dem Dampfeinlass 14 in Verbindung steht, öffnet und schließt. Das Ventil 21 enthält einen Ventilteller 21 a, der derart mit der Abdeckung 12, bevorzugt über einen Stempel 22, verbunden ist, das der Ventilteller 21 a den Bewegungen der Abdeckung 12 folgt. Es ist weiterhin eine Rückkehreinrichtung 23 vorgesehen, die dafür sorgt, dass sich die Abdeckung 12 immer in der in Pfeilrichtung A äußersten (bevorzugt obersten) ersten Stellung im Führungsgehäuse 19 befindet und dort verbleibt. Da der Ventilteller 21 a an der dem Dampfeinlass 14 zugewandten Seite der Einlassöffnung 14a abdichtend anliegt, kann dies auch durch einen anliegenden Dampfdruck unterstützt werden. Die Rückkehreinrichtung 23 enthält jedoch weiterhin eine Feder, die sich auf dem Ventilgehäuse 20 und der Unterseite der Abdeckung 12 abstützt.

In der Dampfzufuhr 13 ist weiterhin das bereits beschriebene Ventil 9a vorgesehen. Durch die Anordnung zweier Ventile, d.h. des ersten Ventils 9a und des zweiten Ventils 21 wird eine noch größere Sicherheit für den Benutzer erreicht.

Das Ausführungsbeispiel 10b der Vorrichtung 10 wird verwendet, indem der Benutzer sein Trinkgefäß 5 in der anhand Fig. 2 beschriebenen Weise kopfüber auf die Abdeckfläche 12a stellt, so dass alle Öffnungen 16 überdeckt sind. Dann wird das Ventil 9a über ein Bedienelement 7 in beschriebener Weise geöffnet und der Benutzer drückt das Trinkgefäß 5 in Richtung auf die Abdeckung 12, wodurch ein besserer Dichtkontakt geschaffen wird und das zweite Ventil 21a geöffnet wird, sofern dies nicht bereits durch das Eigengewicht des Trinkgefäßes 5 geschehen ist. Dampf strömt durch die Einlassöffnung 14a in den Dampfverteilraum 15 und von dort durch die Öffnungen 16 in den Innenraum 5a und wärmt das Trinkgefäß 5 vor.

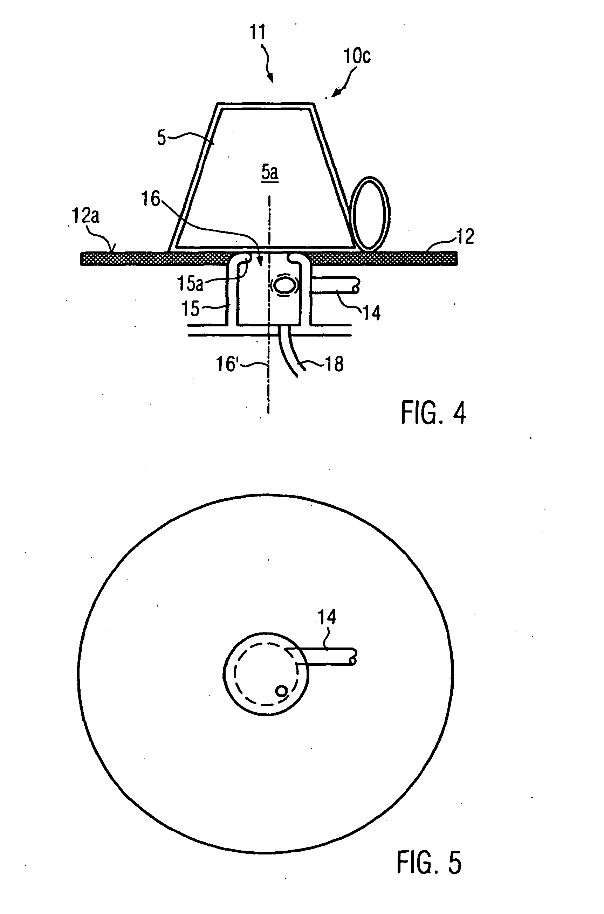

Aus den Fig. 4 und 5 ist ein drittes Ausführungsbeispiel 10c der erfindungsgemäßen Vorrichtung ersichtlich. Gleiche bzw. vergleichbare Bauteile werden mit den gleichen Bezugszeichen wie in den vorangegangenen Ausführungsbeispielen gekennzeichnet, wobei nur die Abweichungen nachfolgend beschrieben werden. Auch das Ausführungsbeispiel 10c der erfindungsgemäßen Vorrichtung 10 enthält eine Aufnahmeeinrichtung 11 für das Trinkgefäß 5, die eine Abdeckung 12 mit einer Abdeckfläche 12a aufweist. Die Abdeckfläche 12a ist von einer einzigen Öffnung 16 durchsetzt, die einen Dampfverteilraum 15 mit dem Inneren eines umgekehrt auf der Abdeckfläche 12a aufgestellten Trinkgefäßes 5 verbinden. Es ist weiterhin ein Dampfeinlass 14 und eine Kondensatausiassieitung 18 vorgesehen.

Der Dampfeinlass 14 mündet in diesem Ausführungsbeispiel quer zu einer senkrechten Mittellinie 16' der Öffnung 16. Auf diese Weise kann sich die Dampfströmung zunächst beruhigen, bevor sie durch die Öffnung 16 hindurchtritt. Bevorzugt mündet der Dampfeinlass 14 jedoch tangential in einen etwa kreiszylinderförmigen Dampfverteilraum 15, so dass sich im Dampfverteilraum 15 eine zyklonartige Strömung ergibt, die zu einer starken Beruhigung der Dampfströmung führt, so dass Benutzer nicht gefährdet werden. Die Beruhigung der Dampfströmung kann noch verstärkt werden durch einen nach innen, d.h. in den Dampfverteilraum 15 eingebogenen, oberen Rand 15a, der sich um die Öffnung 16 erstreckt und insbesondere die zyklonartige Strömung in der Dampfverteilkammer 15 solange zurückhält, d.h. am Entweichen durch die Öffnung 16 hindert, bis die Geschwindigkeit des Dampfes stark vermindert ist.

Die Kondensatableitung 18 mündet wie auch bei den vorangegangenen Ausführungsbeispielen aus dem der Öffnung 16 gegenüberliegenden Boden der Dampfverteilkammer 15, d.h. in der Nähe oder am tiefste Punkt, jedoch bevorzugt seitlich zur Mittellinie 16' versetzt.

In Abwandlung der beschriebenen und gezeichneten Ausführungsbeispiele kann die erfindungsgemäße Vorrichtung beispielsweise dadurch abgewandelt werden, dass das Trinkgefäß mit nach oben weisender Öffnung mit der Abdeckfläche in Kontakt kommt, entweder indem die Abdeckfläche auf das Trinkgefäß abgesenkt oder das Trinkgefäß von unten gegen die Abdeckfläche gedrückt wird. Dabei erfolgt selbstverständlich die Dampfzufuhr von oben. Die Dampfzufuhr kann weiterhin auch nur durch ein einziges Ventil, beispielsweise nur das mechanische Ventil geöffnet werden. Das oder die Ventile können auch andere Konstruktionen aufweisen. Gegebenenfalls reicht eine Krümmung in der Dampfzufuhr als Labyrinthstrecke aus. Die Dampfzufuhr kann auch seitlich in die Abdeckung hinein erfolgen und dann beispielsweise über quer zur Fließrichtung des Dampfes in der Leitung angeordnete Öffnungen in das Innere des Trinkgefäßes gelangen.

## Patentansprüche

1. Vorrichtung (10) zum Erwärmen eines Trinkgefäßes (5), insbesondere für eine Getränkemaschine (1), mit einer Aufnahmeeinrichtung (11) für das Trinkgefäß (5), die eine eine Abdeckfläche (12a) für die Öffnung des Trinkgefäßes (5) enthaltende Abdeckung (12) und eine Dampfzufuhr (13) in das Innere (5a) des Trinkgefäßes (5) enthält, **dadurch gekennzeichnet, dass** die Dampfzufuhr (13) einen an der der Abdeckfläche (12a) gegenüberliegenden Seite der Abdeckung (12) angeordneten Dampfverteilraum (15) aufweist, der mit einem Dampfeinlass (14) verbunden ist und über wenigstens eine Öffnung (16) in der Abdeckfläche (12a) ausmündet.

2. Vorrichtung nach Anspruch 1, **dadurch gekennzeichnet, dass** der Dampfverteilraum (15) als Kondensatsammeleinrichtung (17) ausgebildet ist.

3. Vorrichtung nach Anspruch 1 oder 2, **dadurch gekennzeichnet, dass** die Dampfzufuhr (13) wenigstens ein, bevorzugt zwei benutzerbetätigbare Ventile (9a, 21) zum Öffnen der Dampfzufuhr (13) enthält.

4. Vorrichtung nach Anspruch 3, **dadurch gekennzeichnet, dass** ein mechanisch durch eine Bewegung der Abdeckung (12) betätigbares Ventil (21) und ein durch ein Bedienelement (7) betätigbares Ventil (9a) vorgesehen ist.

5. Vorrichtung nach einem der Ansprüche 1 bis 4, **dadurch gekennzeichnet, dass** die wenigstens eine Öffnung (16) als Durchbrechung der Abdeckung (12) ausgebildet ist und sich durch diese hindurcherstreckt.

6. Vorrichtung nach einem der Ansprüche 1 bis 5, **dadurch gekennzeichnet, dass** die Abdeckfläche (12a) einen dampfdurchlässigen Bereich mit einer Mehrzahl von Öffnungen (16) aufweist.

7. Vorrichtung nach einem der Ansprüche 1 bis 6, **dadurch gekennzeichnet, dass** die Dampfzufuhr (13) eine Dampf-Labyrinthstrecke enthält.

8. Vorrichtung nach Anspruch 7, **dadurch gekennzeichnet, dass** die Dampf-Labyrinthstrecke durch den Dampfeinlass (14) und die wenigstens eine Öffnung (16) gebildet ist, die zueinander versetzt in den Dampfverteilraum () einmündenden.

9. Vorrichtung nach einem der Ansprüche 1 bis 8, **dadurch gekennzeichnet, dass** der Dampfeinlass (14) zum Ausbilden einer Zyklonstrecke quer oder tangential zur Öffnung (16) in den Dampfverteilraum (15) einmündet.

10. Vorrichtung nach einem der Ansprüche 1 bis 9, **dadurch gekennzeichnet, dass** die Abdeckfläche (12a) als Stellfläche für das umgedrehte Trinkgefäß (5) ausgebildet ist.

11. Vorrichtung nach einem der Ansprüche 1 bis 10, **dadurch gekennzeichnet, dass** die Abdeckfläche (12a) eine umlaufende Dichtfläche für den Rand des Trinkgefäßes (5) aufweist.

12. Getränkemaschine (1) mit einem Dampfbereiter (9), **gekennzeichnet durch** eine Vorrichtung (10) nach einem der Ansprüche 1 bis 11, wobei der Dampfbereiter (9) mit der Dampfzufuhr (13) verbunden ist.

13. Getränkemaschine nach Anspruch 12, mit einer Steuerung (6) zum Steuern von Getränkezubereitungs- und -ausgabevorgängen und einer mit einem Ventil (9a) versehenen Dampfzufuhr (13), wobei das Ventil (9a) mit der Steuerung (6) verbunden ist.

## Claims

1. Device (10) for heating a drinking vessel (5), particularly for a drink machine (1), with a receptacle means (11) for the drinking vessel (5), which contains a cover (12) that contains a covering surface (12a) for the opening of the drinking vessel (5) and a steam delivery (13) into the interior (5a) of the drinking vessel (5), **characterised in that** the steam delivery (13) has a steam distribution chamber (15) arranged on a side of the cover (12) that lies opposite the covering surface (12a), wherein this steam distribution chamber (15) is connected to a steam intake (14) and leads to at least one opening (16) in the covering surface (12a).

2. Device according to Claim 1, **characterised in that** the steam distribution chamber (15) is formed as a condensate collection device (17).

3. Device according to Claim 1 or 2, **characterised in that** the steam delivery (13) contains at least one, preferably two, valves (9a, 21) that can be operated by the user to open the steam delivery (13).

4. Device according to Claim 3, **characterised in that** a valve (21) that can be operated mechanically by a movement of the cover (12) and a valve (9a) that can be operated by an operating element (7) are provided.

5. Device according to one of the Claims 1 to 4, **characterised in that** the at least one opening (16) is formed as a through-hole in the cover (12) and extends through this.

6. Device according to one of the Claims 1 to 5, **characterised in that** the covering surface (12a) has a steam-permeable area with a multiple number of openings (16).

7. Device according to one of the Claims 1 to 6, **characterised in that** the steam supply (13) contains a steam labyrinth section.

8. Device according to Claim 7, **characterised in that** the steam labyrinth section is formed by the steam intake (14) and the at least one opening (16), which, offset from each other, lead into the steam distribution chamber (15).

9. Device according to one of the Claims 1 to 8, **characterised in that** the steam intake (14) leads into the steam distribution chamber (15) to form a cyclonic section transverse or tangential to the opening (16).

10. Device according to one of the Claims 1 to 9, **characterised in that** the covering surface (12a) is formed as a positioning base for the inverted drinking vessel (5).

11. Device according to one of the Claims 1 to 10, **characterised in that** the covering surface (12a) has a sealing surface around the circumference for the edge of the drinking vessel (5).

12. Drink machine (1) with a steam preparer (9), **characterised by** a device (10) according to one of the Claims 1 to 11, wherein the steam preparer (9) is connected to the steam delivery (13).

13. Drink machine according to Claim 12, with a control means (6) for controlling drink preparation processes and drink dispensing processes and a steam delivery (13) provided with a valve (9a), wherein the valve (9a) is connected to the control means (6).

## Revendications

1. Dispositif (10) destiné à chauffer un récipient à boire (5), en particulier pour une machine à boisson (1), comportant un dispositif de réception (11) pour le récipient à boire (5), lequel comporte un couvercle (12), qui comprend une surface de recouvrement (12a) de l'ouverture du récipient à boire (5), et une alimentation en vapeur (13) vers l'intérieur (5a) du récipient à boire (5), **caractérisé en ce que** l'alimentation en vapeur (13) comporte une chambre de distribution de la vapeur (15), qui est disposée sur le côté du couvercle (12), opposé à la surface de recouvrement (12a), et qui est reliée à une admission de vapeur (14) et débouche via au moins une ouverture (16) dans la surface de recouvrement (12a).

2. Dispositif selon la revendication 1, **caractérisé en ce que** la chambre de distribution de la vapeur (15) est réalisée sous la forme d'un collecteur de condensat (17).

3. Dispositif selon la revendication 1 ou 2, **caractérisé en ce que** l'alimentation en vapeur (13) comporte au moins une, de préférence deux soupapes (9a, 21), actionnables par l'utilisateur pour ouvrir l'alimentation en vapeur (13).

4. Dispositif selon la revendication 3, **caractérisé en ce qu'**il est prévu une soupape (21) actionnable mécaniquement par un mouvement du couvercle (12) et une soupape (9a) actionnable par un élément de commande (7).

5. Dispositif selon l'une quelconque des revendications 1 à 4, **caractérisé en ce que** ladite au moins une ouverture (16) est réalisée sous la forme d'un passage du couvercle (12) et traverse de part en part ledit couvercle.

6. Dispositif selon l'une quelconque des revendications 1 à 5**, caractérisé en ce que** la surface de recouvrement (12a) comporte une zone laissant passer la vapeur, munie d'une pluralité d'ouvertures (16).

7. Dispositif selon l'une quelconque des revendications 1 à 6, **caractérisé en ce que** l'alimentation en vapeur (13) comporte une voie à labyrinthe pour la vapeur.

8. Dispositif selon la revendication 7, **caractérisé en ce que** la voie à labyrinthe pour la vapeur est formée par l'admission de vapeur (14) et ladite au moins une ouverture (16), lesquelles débouchent dans la chambre de distribution de la vapeur (15) en étant décalées l'une par rapport à l'autre.

9. Dispositif selon l'une quelconque des revendications 1 à 8, **caractérisé en ce que** l'admission de vapeur (14), en vue de former une voie à cyclone, débouche transversalement ou tangentiellement par rapport à l'ouverture (16) dans la chambre de distribution de la vapeur (15).

10. Dispositif selon l'une quelconque des revendications 1 à 9, **caractérisé en ce que** la surface de recouvrement (12a) est réalisée sous la forme d'une surface de pose pour le récipient à boire (5) en position renversée.

11. Dispositif selon l'une quelconque des revendications 1 à 10, **caractérisé en ce que** la surface de recouvrement (12a) comporte une surface étanche périphérique pour le bord du récipient à boire (5).

12. Machine à boisson (1) comportant un préparateur de vapeur (9), **caractérisée par** un dispositif (10) selon l'une quelconque des revendications 1 à 11, le préparateur de vapeur (9) étant relié à l'alimentation en vapeur (13).

13. Machine à boisson selon la revendication 12, comportant une commande (6), destinée à commander les processus de préparation et de distribution de la boisson, et une alimentation en vapeur (13), munie d'une soupape (9a), ladite soupape (9a) étant reliée à la commande (6).
